# EUROPEAN PATENT APPLICATION

(11) **EP 0 599 326 A1**
(43) Date of publication of application: **01.06.1994**
(21) Application number: 93119043.3
(22) Date of filing: 16.10.1990
(51) Int. Cl.: A23L 1/217, A23L 1/164, A23C 11/04

(54) **Process for raking a corrugated snack product**

(30) Priority: 18.10.1989 GB 8923469
(62) Divisional of application: 90915329.8
(71) Applicant: UNITED BISCUITS (UK) LIMITED, Edinburgh, Scotland EH2 4DD (GB)
(72) Inventor: Clark, David Nigel, Quorn, Leicestershire (GB); Dunkerton, Paul David, Oakthorope, S. Derbyshire (GB)
(74) Representative: Humphreys, Ceris Anne

(57) **Abstract**

In a process for the manufacture of a snack food product a flat sheet of dough 4 is formed and fed to a pair 7 of embossed rollers arranged both to decrease the piece weight of the sheet of dough and to impart a three-dimensional patterned configuration to the sheet of dough. Individual portions are cut out from the patterned sheet so obtained and fried to form a snack food product having an attractive appearance.

## Description

The invention relates to a process for the manufacture of a snack food product, and especially a snack food product of which the appearance resembles that of a "crinkle-cut" or "corrugated" potato crisp. The invention also relates to a snack food product produced by the process.

Crinkle-cut or corrugated potato crisps are essentially made by frying thin potato slices that have been so cut as to give them a crinkled configuration. Because potatoes are a seasonal crop, but the demand for potato crisps persists throughout the year, the manufacture of potato crisps entails storing potatoes, which is expensive. Furthermore, it is difficult to maintain the processing efficiency and the flavour, colour and texture of the crisps at a consistent level throughout the year.

The problems associated with the use of potatoes could be overcome if corrugated snack food products could be made, not from actual potatoes slices, but from a sheet of material that contained a substantial proportion of a dry potato product, for example, potato flour, potato granules or potato flakes, because dry potato products keep well over long periods without the need for chemical treatment or specially careful control of the storage conditions and, moreover, the properties of any given dry product are relatively consistent as compared with the properties of raw potatoes.

It will be appreciated that, if a technique could be found for making, from a flat sheet of material containing a substantial proportion of potato flour or other dry potato product, a fried product having the crinkled configuration of a corrugated potato crisp, the technique could probably be applied to the manufacture of other corrugated snack food products where the flat sheet of material contains, instead of a substantial proportion of potato flour or other dry potato product, a substantial proportion of a different starchy food product. Wheat, maize, tapioca and rice solids would be examples of such materials. Further, the crinkled configuration of the final, fried product might enhance the texture (as perceived by the consumer) and the attractiveness of the product as compared with a product that was the same except that, instead of having a crinkled configuration, it was flat. Accordingly, the usefulness of the technique would not be confined to products made from ingredients of which a potato product was an important ingredient.

The invention provides a process for the manufacture of a snack food product which comprises forming a flat sheet of dough and feeding it to a pair of embossed rollers arranged both to decrease the piece weight of the sheet of dough (the term "piece weight" being defined hereinafter) to a value not exceeding two fifths of that obtaining immediately before the sheet of dough is acted on by the embossed rollers and to impart a three dimensional patterned configuration to the sheet of dough, the piece weight of the patterned sheet of dough being not less than 2.5 g, cutting out individual portions from the patterned sheet and frying the individual portions to form the snack food product.

The term "piece weight" is used throughout the Specification, including the claims, in relation to a sheet of dough, to mean the weight of a piece of dough removed from the sheet by impressing on the sheet a circular cutter having an internal diameter of 75 mm, the cutter being so applied to the sheet that it does not extend beyond an edge of the sheet.

It will be appreciated that the piece weight provides a measure of the weight per unit area of the sheet and that, if the density of the dough remains constant, the ratio of two piece weights measured at two different parts of the sheet is equal to the ratio of the thicknesses of the two different parts of the sheet.

It has been found that, provided that the reduction in the piece weight that is effected by the embossed rollers is sufficient to reduce it to not more than two fifths of the value obtaining before the sheet is engaged by the embossed rollers (so that the ratio of the piece weight of the sheet before it is acted on by the embossed rollers to the piece weight of the patterned sheet that emerges from between the embossed rollers, is at least 2.5 to 1), the three-dimensional patterned configuration of the sheet is not removed by the frying process, and the final product has a three-dimensional patterned configuration.

It will usually be found convenient to form the flat sheet of dough, at least in part, by a three-roll sheet former or "sheeter". Instead of using such a sheeter to produce the final flat sheet of dough, that is to say, a sheet suitable for feeding to the embossed rollers, it will sometimes be found advantageous to use such a sheeter to produce a flat sheet of dough that is too thick (or has too great a piece weight) to be fed to the embossed rollers, and to interpose between the sheeter and the embossed rollers one or more pairs of reducing rolls which, by reducing the piece weight and thickness of the sheet, complete the formation of the flat sheet that is fed to the embossed rollers.

Advantageously, the embossed rollers are corrugated rollers. Preferably, the corrugated rollers are corrugated in an axial direction, that is to say, the individual corrugations preferably extend circumferentially. Then, any cross-section of each of the corrugated rollers that is taken perpendicular to the axis of the roller is circular in outline, while any axial cross-section of each of the corrugated rollers is bounded (except at the ends) by a wavy or undulating line, the precise form of which indicates the precise form of the corrugations.

There are two reasons why it is preferred that the corrugated rollers be corrugated in an axial direction. The first reason is that the individual corrugations formed in the sheet of dough then extend in the direction of advance of the sheet, with the result that the tension in the sheet that will usually be necessary, in an automated process, to advance it towards the fryer does not tend to remove the corrugations from the sheet, as it would if the individual corrugations in the sheet were to extend in a direction perpendicular to the direction of advance of the sheet. The second reason is that, as is known, it is important in the manufacture of snack products from dough that the correct amount of mechanical work be done on the dough and, although the corrugated rollers can, in accordance with the invention, be corrugated circumferentially (that is to say, the individual corrugations extend axially), the amount of work done on the dough by the corrugated rollers will then depend critically on their relative angular phases with a consequent risk that too much work will be done on the dough.

Advantageously, the rollers are corrugated by virtue of their having circumferentially extending ridges and/or grooves. Preferably, the configuration of the ridges and/or grooves is such that, seen in axial section, the curved surface of each roller has a toothed profile. The toothed profile is generally preferred to a profile in which the peaks and troughs are rounded, for example, a sinusoidal profile, because it tends to impart more pronounced corrugations to the sheet of dough. A profile with rounded peaks and troughs may prove suitable, and even advantageous, when the ratio of the piece weight of the sheet of dough before it is acted upon by the corrugated roller to the piece weight of the corrugated sheet is large. The significance of that ratio is discussed in more detail hereinafter.

Advantageously, the curved surfaces of the two corrugated rollers have, when seen in axial section, the same configuration. The teeth that form the said toothed profile may each be symmetrical about a plane that extends perpendicular to the axis of the roller and passes through the apex of the tooth. Advantageously, the two corrugated rollers are so located relative to one another in an axial direction that the apices of the teeth (save possibly for one end tooth) that form the said profile of one corrugated roller lie in planes that are perpendicular to the axes of the two corrugated rollers and that are midway between planes parallel to those planes and passing through the apices of the teeth that form the said profile of the other corrugated roller. In that way, symmetrical corrugations are formed in the sheet of dough.

If it be desired to form asymmetrical corrugations in the sheet of dough, that may be achieved by arranging that the two corrugated rollers are so located relative to one another in an axial direction that the apices of the teeth (save possibly for one end tooth) that form the said profile of one corrugated roller lie in planes that are perpendicular to the axes of the two corrugated rollers and that are between, but not mid way between, planes parallel to those planes and passing through the apices of the teeth that form the said profile of the other corrugated roller. An alternative approach is to use corrugated rollers which are such that the teeth that form the said profile are each asymmetrical about a plane that extends perpendicular to the axis of the roller and passes through the apex of the tooth.

Preferably, the ratio of the said piece weight of the flat sheet of dough immediately before the sheet is acted on by the patterned rollers to the said piece weight of the patterned sheet of dough is at least 4 to 1. In many cases it will also be found advantageous to arrange that the said ratio does not exceed 6 to 1.

It will be understood that decreasing the thickness of the sheet of dough (or decreasing the piece weight of the sheet) involves doing mechanical work on the dough, with a larger value of the said ratio corresponding (for dough of a given consistency) to a larger amount of mechanical work done on unit mass of the dough. It is important that the amount of mechanical work done by the embossed rollers be sufficient to ensure that the three-dimensional configuration imparted to the sheet of dough does not disappear entirely during the frying step.

It will also be understood that, as indicated hereinbefore, it is important that overall the correct amount of mechanical work be done on the dough (strictly, on unit mass of the dough), the actual amount of mechanical work required depending on the composition of the dough. Further, the amount of mechanical work done in decreasing the piece weight of the sheet of dough by a given factor, say, 2.5, will depend on the consistency of the dough, the amount of work done being less if the dough has more "wetness" and is softer, and greater if the dough is less "wet" and is firmer.

From the explanations given hereinbefore, it will be appreciated that, when determining the ratio of the piece weight of the flat sheet of dough before it is acted upon by the embossed rollers to the piece weight of the patterned sheet, account must be taken of all previous stages of the process, including the composition of the dough.

Typically, the various solid constituents of the dough will be mixed in a mixer, into which the water will be introduced. The formation of a dough that has a high wetness and is softer as against one that is relatively dry and firmer depends, of course, on the amount of water added, but it also depends on the nature of the solid constituents, for some ingredients (especially certain modified starches) have a high capacity to absorb water so that the introduction of a given quantity of water gives a drier dough, or one having less wetness, if the dough contains a substantial proportion of such ingredients. It will be understood by those in the art that the terms "wet" and "dry" refer to the feel of the dough and not to its actual water content.

Some mechanical work is done when the solid constituents are mixed and the water is mixed with them, the actual amount of work depending both on the type of mixer used and on the way in which it is operated. Mechanical work is also done by the sheeter and, if they are used, by the reducing rolls.

Essentially, the aim is to feed to the embossed rollers a flat sheet of dough which has had such an amount of mechanical work done on it and, which has such a piece weight, that the embossed rollers can be arranged to do an amount of mechanical work that both serves to bring the total amount of work done on the dough up to an acceptable level and to do the required amount of work on the dough to ensure that the three-dimensional configuration of the sheet of dough is not removed to an unacceptable extent during frying, and that the embossed rollers can be arranged to bring the piece weight of the patterned sheet within an acceptable range.

Advantageously, the piece weight of the patterned sheet of dough is at least 3.5g. Preferably, it does not exceed 6g. If the patterned sheet of dough has too low a piece weight, it will be difficult to remove the sheet from the rollers and the fried product will be too fragile whereas, if the piece weight is too high, the fried product may lose some of its attractiveness and also an unduly long-frying time may be required to remove the water from the dough.

Advantageously, the dough has been obtained by mixing at least one starchy food product, water and one or more materials selected from the group comprising starches, modified starches, emulsifying agents, flavourings, edible oils. The dough may be formed by a method that includes incorporating water with a dry particulate mixture of materials. The invention is especially valuable when the starchy food product, or at least one of the starchy food products, is a potato product. Preferably, the potato food product, or at least one of the potato products, is potato flour, potato flakes or potato granules.

The dry particulate mixture from which the dough is formed advantageously includes, in addition to a starchy food product, a starch. When the starchy food product is a potato food product, the starch is preferably a potato starch.

A preferred dough includes potato flakes, potato starch and water. The relative proportions of the potato flakes and potato starch are unimportant, provided that, with a suitable amount of water, a mixture of a consistency suitable for forming a sheet of dough and reducing the sheet using reducing rollers can be formed. A modified potato starch is preferably also included to assist in binding the ingredients.

Advantageously, one of the materials used in the formation of the dough is an emulsifying agent, preferably glycerol monostearate.

Examples of other ingredients that may be included in a dough are rice starch (which may improve the texture of the dough) and flavourings (for example, salt).

Advantageously, the formation of the dough includes the incorporation with the said dry particulate mixture of an edible oil, for example, a blended vegetable oil or corn oil. The oil serves to render the dough less sticky, that is to say, to reduce the tendency of the dough to adhere to the rolls and rollers with which it comes into engagement. In practice, the dough is unlikely to adhere to any significant extent to the rolls of the sheeter or, where they are used, to the reducing rolls, but care may be needed to effect clean removal of the dough from the embossed rollers. The incorporation of oil with the said dry particulate mixture during the formation of the dough may make it easier to do that, or lessen or avoid the need to use special techniques known to those in the art for removing dough from rollers, for example, using embossed rollers that are coated with Teflon (Trade Mark), heating one only of the two rollers and (when the embossed rollers are rollers corrugated in an axial direction) running the two embossed rollers at slightly different speeds.

One form of process in accordance with the invention will now be described, by way of example, with reference to the accompanying drawings, in which:
Fig. 1 is a diagrammatic side view of apparatus for carrying out the process; and
Fig. 2 is an axial cross-section, on a larger scale than Fig. 1, taken through a part of the apparatus shown in Fig. 1.

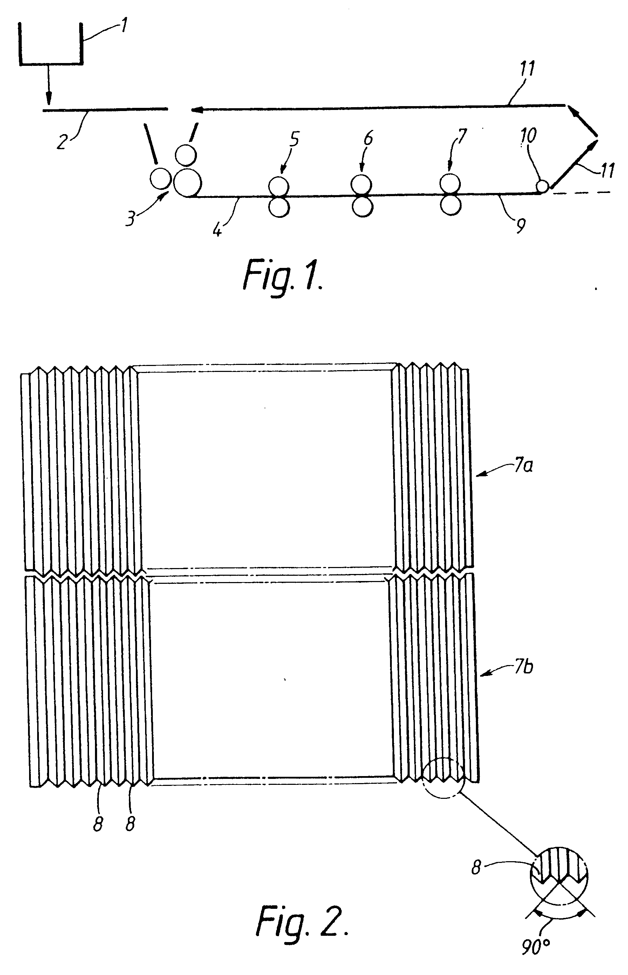

Referring to Fig. 1 of the accompanying drawings, a mixture of solid constituents suitable (with the addition of water) for the formation of a dough are mixed in a mixer, which is shown schematically at 1, water is introduced into the mixer and mixing is continued to form a dough.

The dough formed in the mixer 1 is transported by a conveyor, which is shown schematically at 2, to a three roll sheeter, which is indicated generally by the reference numeral 3. The sheeter 3 does mechanical work on the dough and forms it into a flat sheet 4.

The flat sheet of dough 4 that emerges from the sheeter 3 is fed by a conveyor (not shown), to a first pair of reducing rolls indicated generally by the reference numeral 5. The reducing rolls 5 do mechanical work on the sheet of dough 4, reducing the thickness (and hence reducing the piece weight) of the sheet. From the first set of reducing rolls 5, the sheet of dough 4 is fed by a conveyor (not shown) to a second set of reducing rolls indicated generally by the reference numberal 6. The rolls 6 are arranged further to reduce the thickness of the sheet of dough 4 and, in doing that, they do mechanical work on the dough. The rolls 5 and 6 are so driven that the rolls 6 have a higher circumferential speed than that of the rolls 5 to take account of the increase in the speed of advance of the sheet of dough 4 that results from the decrease in the thickness of the sheet that is effected by the rolls 5.

From the second pair of reducing rolls 6, the sheet of dough is fed by a conveyor (not shown) to a pair of embossed rollers, which are indicated generally by the reference numeral 7. The term "embossed" is used throughout the specification, including the claims, to refer to the configuration of the curved surfaces of rollers, and not to the way in which the rollers are made. Thus, the term "embossed" is used herein to mean that the curved surface of an embossed roller bears a pattern, which is in relief. Because the pattern is in refief it imparts a corresponding 3-dimensional configuration to the sheet of dough.

The embossed rollers 7 comprise an upper roller which is indicated generally by the reference numeral 7a and a lower roller which is indicated generally by the reference numeral 7b. Referring to the Fig. 2 the rollers 7a and 7b, which are identical, are corrugated in an axial direction that is to say, they are corrugated with the individual corrugations extending circumferentially.

The form of the corrugation on the rollers 7a and 7b is such that, as seen in axial section and shown in Fig. 2, the curved surfaces of each of the rollers has a toothed profile. Again with the roller 7a and 7b seen in axial section, the teeth 8 are bounded by straight lines which meet at an angle of 90° at the apices of the teeth. Similarly, the lines that bound the teeth meet at an angle of 90° at the bases of the gaps between adjacent teeth.

The rollers 7a and 7b are displaced axially relative to one another by half the pitch of the corrugations, that is to say, by half the separation between the apices of adjacent teeth 8. Thus, save for an end tooth of the teeth 8 on the roller 7a, the apices of each of the teeth on the rollers 7a lie mid way between the apices of the teeth of a pair of adjacent teeth on the roller 7b. Similarly, save for an end tooth of the teeth 8 on the roller 7b, the apices of each of the teeth on the rollers 7b lie mid way between the apices of the teeth of a pair of adjacent teeth on the roller 7a.

The embossed rollers 7 serve not only to impart a three-dimensional patterned configuration to the dough (here, a corrugated pattern with the individual corrugations extending in the direction of advance of the dough), but also to reduce materially the piece weight of the sheet of dough, which implies that the embossed rollers do a substantial amount of mechanical work on the dough.

The corrugated sheet of dough 9 that emerges from the embossed rollers 7 is fed to a cutter 10, which cuts out from the corrugated sheet individual portions of the shape and size desired for the final product. What remains of the corrugated sheet 9 after the portions have been removed by the cutter is recycled by a conveyor, shown schematically at 11, to the three roll sheeter 3. It will be appreciated that the dough that is recycled in that way has already had a considerable amount of mechanical work done on it, and it may be found that account may have to be taken of that, and of the proportion of dough that is recycled, when deciding how much mechanical work should be done on the dough at other stages of the process. The recycled dough will in general constitute only a relatively small proportion, say 10 to 15% or less, of the dough entering the sheeter so that the amount of mechanical work required will be only slightly different from what it would be if no dough were recycled.

The portions of dough that have been cut out of the corrugated sheet 9 by the cutter 10 are fed to a fryer. The frying serves to expel the water from the portions of dough and to form the final, snack product.

In a typical process, the flat sheet of dough 4 may leave the three roll sheeter at a speed of rather less than 2 feet per minute (say, about 0.5m per minute), and the corrugated sheet of dough 5 may leave the embossed rollers 7 at a speed of about 6 feet per minute (say, about 2m per minute). It will be appreciated that the speed of the conveyors on which the sheet of dough is transported between the sheeter and the first set of reducing rolls, between the first and second sets of reducing rolls and between the second set of reducing rolls and the embossed rollers, respectively, will be selected, taking into account the speed at which the sheet is delivered onto the respective conveyor by the sheeter or the rolls and the speed at which the sheet is subsequently taken up by the rolls or the embossed rollers as the case may be, such that the sheet of dough is under low tension, thereby reducing the risk of breakage of the sheet of dough.

As an example of suitable dimensions for the corrugations on the embossed rollers 7, the spacing between the apices of adjacent teeth of the rollers shown in Fig. 2 may be 4mm.

The following examples illustrate the invention:

### Example 1

The following dry ingredients, in the quantities indicated, were mixed for two minutes in a Hobart mixer, which was set at "Slow" speed, using a paddle mixer:

| | |
|---|---|
| Whole Potato Flake | 400g |
| Rice Starch | 20g |
| Salt | 20g |
| Glycerol monostearate | 10g |
| Paselli P (Modified Potato Starch) | 15g |
| Potato Starch | 150g |

After the dry ingredients had been mixed for two minutes, mixing was continued while 400ml water was added over a period of approximately ten seconds. The resulting dough was mixed for a further two minutes and then, without stopping the mixer, 10ml edible oil was added over a period of approximately two seconds. Thereafter, mixing was continued for a further two minutes. The dough so obtained had a crumbly texture but, when squeezed by hand, could be formed into a solid mass which, when released, did not disintegrate spontaneously.

The dough was transferred by hand to a three-roll sheet-former, which formed it into a sheet of dough having a piece weight of 27.0g. The sheet was transferred to a sheet processing apparatus, which included two pairs of reducing rollers through which the sheet passed in line and a pair of corrugated rollers through which the sheet passed after it had passed through the second pair of reducing rollers. The corrugated rollers were as described above with reference to Fig. 2 of the accompanying drawings, the spaces between the apices of adjacent teeth being 4mm. The first pair of reducing rollers was arranged to decrease the piece weight of the sheet to 22.0g, and the second pair of reducing rollers was arranged to reduce further the piece weight of the sheet. After it had passed through the second pair of reducing rollers, the sheet had a piece weight of 17.0g. The corrugated rollers were arranged to reduce the piece weight of the sheet from 17.0g to 4.0g. Individual portions were cut from the resulting corrugated sheet by hand and fried in oil at a temperature of 180°C for 40 seconds.

The corrugations were retained during frying and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

### Example 2

Individual products were made in accordance with the method of Example 1 except that the corrugated rollers were arranged to reduce the piece weight of the sheet to 3.5g. The corrugations were retained during frying, but the final, fried product was slightly more fragile than the product of Example 1.

### Example 3

Individual products were made in accordance with the method of Example 1 except that the corrugated rollers were arranged to reduce the piece weight of the sheet to 3.0g. The lower piece weight reduced the frying time necessary to cook the products, and the frying time was only slightly less than 40 seconds. The corrugations were retained during frying but the final, fried product was more fragile than the product of Example 1.

### Example 4

Individual products were made in accordance with the method of Example 1 except that the corrugated rollers were arranged to reduce the piece weight of the sheet to 2.5g and the frying time was slightly less than 40 seconds. The corrugations were retained on frying but the final, fried product was more fragile than the product of Example 1.

### Example 5

Individual products were made in accordance with the method of Example 1 except that the second pair of reducing rollers was arranged to reduce the piece weight of the sheet from 22.0g to 15.0g and the corrugated rollers were arranged to reduce the piece weight of the sheet from 15.0g to 4.0g. On frying, the corrugations were well retained, and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

### Example 6

Individual products were made in accordance with the method of Example 1 except that the second pair of reducing rollers was arranged to reduce the piece weight of the sheet from 22.0g to 12.0g and the corrugated rollers were arranged to reduce the piece weight of the sheet from 12.0g to 4.0g. On frying, the corrugations were well retained and the strength of the final, fried product was such that, under conditions that were simulated to resemble those that would obtain during normal handling and transport of the kind to which such snack products are generally subjected, the amount of breakage of the products which occurred was small and was within limits which would generally be regarded as acceptable for such products.

### Example 7

Individual products were made in accordance with the method of Example 1 except that the second pair of reducing rollers was arranged to reduce the piece weight of the sheet from 22.0g to 10.0g and the corrugated rollers were arranged to reduce the piece weight of the sheet from 10.0g to 4.0g. On frying, the corrugations were well retained and the strength of the final, fried product was such that, under conditions that were simulated to resemble those that would obtain during normal handling and transport of the kind to which such snack products are generally subjected, the amount of breakage of the products which occurred was within limits which would generally be regarded as acceptable for such products.

As will be apparent from Examples 1 to 7 above, where the ratio of the piece weight of the flat sheet of dough immediately before the sheet is acted upon by the embossed rollers to the piece weight of the patterned sheet of dough was at least 2.5 to 1, there was retention of corrugations during frying and improved resistance to breakage of the product.

As a basis for comparison with the Examples according to the invention, individual products were made in accordance with the method of Example 1, except that the second pair of reducing rollers was arranged to reduce the piece weight of the sheet from 22.0g to 4.0g and the corrugated rollers were so arranged that when the sheet passed between the roller corrugations were imparted to the sheet without further reduction in the piece weight of the sheet. When the portions cut from the corrugated sheet were fried, they did not retain the corrugations, although residual score marks were observed in the final, fried product.

The formation of a sheet of piece weight less than 2.5g was found not to be practicable because removal of such a sheet from the corrugated rollers was difficult.

## Claims

1. A process for the manufacture of a snack food product which comprises forming a flat sheet of dough and feeding it to a pair of embossed rollers arranged both to decrease the piece weight of the sheet of dough (the term "piece weight" being defined as the weight of a piece of dough removed from the sheet by impressing on the sheet a circular cutter having an internal diameter of 75 mm, the cutter being so applied to the sheet that it does not extend beyond an edge of the sheet) to a value not exceeding two fifths of that obtaining immediately before the sheet of dough is acted on by the embossed rollers and to impart a three dimensional patterned configuration to the sheet of dough, the piece weight of the patterned sheet of dough being not less than 2.5 g, cutting out individual portions from the patterned sheet and frying the individual portions to form the snack food product.

2. A process as claimed in claim 1, wherein the embossed rollers are corrugated rollers.

3. A process as claimed in claim 2, wherein the corrugated rollers are corrugated in an axial direction.

4. A process as claimed in claim 2 or claim 3, wherein the rollers are corrugated by virtue of their having circumferentially extending ridges and/or grooves.

5. A process as claimed in claim 4, wherein the configuration of the ridges and/or grooves is such that, seen in axial section, the curved surface of each roller has a toothed profile.

6. A process as claimed in claim 5, wherein the curved surfaces of the two corrugated rollers have, when seen in axial section, the same configuration.

7. A process as claimed in claim 6, wherein the teeth that form the said profile are each symmetrical about a plane that extends perpendicular to the axis of the roller and passes through the apices of the tooth.

8. A process as claimed in claim 7, wherein the two corrugated rollers are so located relative to one another in an axial direction that the apices of the teeth (save possibly for one end tooth) that form the said profile of one corrugated roller lie in planes that are perpendicular to the axes of the two corrugated rollers and that are midway between planes parallel to those planes and passing through the apices of the teeth that form the said profile of the other corrugated roller.

9. A process as claimed in claim 7, wherein the two corrugated rollers are so located relative to one another in an axial direction that the apices of the teeth (save possibly for one end tooth) that form the said profile of one corrugated roller lie in planes that are perpendicular to the axes of the two corrugated rollers and that are between, but not midway between, planes parallel to those planes and passing through the apices of the teeth that form the said profile of the other corrugated roller.

10. A process as claimed in claim 6, wherein the teeth that form the said profile are each asymmetrical about a plane that extends perpendicular to the axis of the roller and passes through the apex of the tooth.

11. A process as claimed in any one of claims 1 to 10, wherein the flat sheet of dough is formed, at least in part, by a three-roll sheet former.

12. A process as claimed in claim 1, wherein the ratio of the said piece weight of the flat sheet of dough immediately before the sheet is acted on by the embossed rollers to the said piece weight of the patterned sheet of dough is at least 4 to 1.

13. A process as claimed in any one of claims 1 to 12, wherein the ratio of the said piece weight of the flat sheet of dough immediately before the sheet is acted on by the embossed rollers to the said piece weight of the patterned sheet does not exceed 6 to 1.

14. A process as claimed in any one of claims 1 to 13, wherein the said piece weight of the patterned sheet of dough is at least 3.5g.

15. A process as claimed in any one of claims 1 to 14, wherein the said piece weight of the patterned sheet of dough does not exceed 6g.

16. A process as claimed in any one of claims 1 to 15, wherein the dough has been obtained by mixing at least one starchy food product, water and one or more materials selected from the group comprising starches, modified starches, emulsifying agents, flavourings, edible oils.

17. A process as claimed in claim 16, wherein the starchy food product, or at least one of the starchy food products is a potato product, for example potato flour, potato flakes or potato granules.

18. A process as claimed in claim 16 or claim 17, wherein one of the materials used in the formation of the dough is a starch, for example, a potato starch.
